(19) Europäisches Patentamt
European Patent Office
Office européen des brevets

(11) **EP 4 145 394 B1**

(12) **EUROPEAN PATENT SPECIFICATION**

(45) Date of publication and mention
of the grant of the patent:
**03.09.2025 Bulletin 2025/36**

(51) International Patent Classification (IPC):
*G06T 9/00* (2006.01)     *H04N 19/124* (2014.01)
*H04N 19/154* (2014.01)     *H04N 19/172* (2014.01)

(21) Application number: **21382799.1**

(52) Cooperative Patent Classification (CPC):
**H04N 19/124; H04N 19/154; H04N 19/172**

(22) Date of filing: **06.09.2021**

(54) **PERSONALIZED PERCEPTUAL VIDEO ENCODER FOR MISSION-CRITICAL TASKS**

PERSONALISIERTER WAHRNEHMUNGSVIDEOCODIERER FÜR BETRIEBSKRITISCHE AUFGABEN

CODEUR VIDÉO PERCEPTUEL PERSONNALISÉ POUR LES TÂCHES CRITIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.03.2023 Bulletin 2023/10**

(73) Proprietor: **Nokia Technologies Oy**
**02610 Espoo (FI)**

(72) Inventors:
• **PEREZ GARCIA, Pablo**
**Guadalajara (ES)**
• **CASAL MARTIN, Juan**
**Madrid (ES)**
• **VILLEGAS NUÑEZ, Alvaro**
**Madrid (ES)**

• **PEREIRA VEGA, Francisco**
**Madrid (ES)**

(74) Representative: **Balder IP Law, S.L.**
**Paseo de la Castellana 93**
**5ª planta**
**28046 Madrid (ES)**

(56) References cited:
WO-A1-2017/155786     WO-A1-2019/012363
US-A1- 2019 132 591

• MARZUKI ISMAIL ET AL: "Perceptual Adaptive Quantization Parameter Selection Using Deep Convolutional Features for HEVC Encoder", IEEE ACCESS, IEEE, USA, vol. 8, 24 February 2020 (2020-02-24), pages 37052 - 37065, XP011775358, DOI: 10.1109/ACCESS.2020.2976142

**Description**

## TECHNICAL FIELD

The present invention relates to a method and apparatus for controlling transmission bitrate based on personalized perceptual quality optimized rate control for real-time video.

## BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

With the fifth generation of mobile technology (5G), wireless networks increase their capabilities in terms of achieved throughput (enhanced Mobile Broadband, eMBB), latency (Ultra-reliable low latency communication, URLLC), and device density (massive Machine Type Communications, mMTC). But, besides that, it provides improved flexibility to apply these new capabilities to a specific subset of devices, using approaches such as network slicing or non-public networks (NPNs). This opens a new set of video-related services for professional users and vertical industries which, in previous technological generations, were only possible using wired networks, ad-hoc wireless links, or even were not possible whatsoever.

Addressing this set of use cases is challenging for several reasons. Their requirements and Quality of Experience (QoE) expectations may be different from the ones typically present in "traditional" video communication services, such as streaming or videoconference. The experience and expectations of the use case owners may not be applicable to cellular wireless networks, even when QoS policies are applied. Furthermore, professional and vertical markets typically have much less users than the video consumer market (there are fewer content producers than content consumers), or the video transmission is just one of the pieces of a much more complex ecosystem (as e.g. in the automotive industry). As a consequence of that, totally new use cases are being addressed with the same set of coding and QoE evaluation tools that were being used for entertainment and personal communication video.

When designing mission-critical services, such as tele-operated driving (ToD), the use case may normally assume that the bitrate for transferring video is high enough so that the video quality is high for all operators (drivers) in all conditions. It may also be assumed that some level of traffic prioritization (QoS guarantee) is available, e.g. non-public networks or slices.

For instance, the 5G Automotive Association (5GAA) is setting a requirement of 8 Mbps per HD camera (in H.264), for a total of 32 Mbps of uplink. This way it may be possible to guarantee sufficient visual quality for all the possible situations. However, when the codec is not stressed (e.g. when driving at low speeds in static scenarios), this may be a waste of bandwidth in the network.

Document "Perceptual Adaptive Quantization Parameter Selection using Deep Convolutional Features for HEVC Encoder, IEE ACESS, IEE, USA, vol. 8, 24 February 2022", describes perceptual adaptive quantization techniques based on deep neural network and high efficiency video coding (HEVC) for bitrate reduction. Document WO2017/155786 discloses a system and method for process video based on quantization parameters used to encode image blocks of the video.

Therefore, one problem is how to reduce the bitrate when possible, without affecting the visual quality and therefore the service.

## SUMMARY

Some embodiments provide a method, apparatus, and computer program product for controlling transmission of small amount of data from a user equipment to a wireless network when the user equipment is in an inactive state without changing the state of the user equipment from inactive state to connected state. The invention is set out in the appended set of claims.

In particular, some embodiments provide at least one of the following two key elements:

- A perceptual-quality-optimized rate control for real-time video, which decides a value of a quantization parameter (QP) for each frame to reach an expected opinion score, and
- Usage of per-user opinion model(s) instead of a mean opinion score (MOS).

Both the above-mentioned elements can be used separately or combined, but using both of them together may achieve more efficient encoding than when using only one of them.

According to some embodiments training is done for a specific subject and algorithm(s) is/are targeted only to an encoder to be able to keep constant perceptual quality for a mission-critical user. The encoder works in a frame-by-frame basis, thus aiming to obtain lowest latency for mission-critical applications.

The equipment can be inserted in a loop of a coding processes (QP decision, intermediate PSNR calculation).

According to an embodiment, the rate-control outputs a quantization parameter (QP) per each frame.

According to an embodiment of an algorithm, supervised training is used, since the embodiment is targeting for a single user and a single task, where it is assumed that the diversity of video sources is limited. This may provide much better performance than a generic reinforcement-learning based approach like a Video Quality Awareness Rate Control for real-time video streaming via deep reinforcement learning (QARC).

Decisions are based on the frame to encode, normalized through a pre-defined QP which has been selected to optimize the coding efficiency.

Temporal correlation in the video is represented by the quantization parameter QP and normalization Peak Signal to Noise Ratio (PSNR), which are later used for training and inference in a neural network. This may allow a relatively shallow convolutional neural network (CNN) to be used for the purpose.

According to some aspects, there is provided the subject matter of the independent claims. Some further aspects are defined in the dependent claims. The embodiments that do not fall under the scope of the claims are to be interpreted as examples useful for understanding the disclosure.

According to a first aspect there is provided a method comprising:

obtaining, in an encoder, frames of video data for transmission;
providing the frames of the video data for rate control, wherein the rate control comprises:

obtaining a target value for at least one of an opinion score and a per-user opinion score;
obtaining a normalization quantization parameter;
using the normalization quantization parameter to encode and decode a particular frame of the video data, calculating an objective distortion metric associated to the normalization quantization parameter for the particular frame;
executing a convolutional neural network to extract at least one feature indicative of at least one of perceptual quality and complexity of the particular frame in view of compression efficiency;
using a dense neural network, which has been previously trained using extracted features, normalization quantization parameters with their associated objective distortion metrics, and target quantization parameters that relate to target opinion scores of other frames of video data as inputs, and a regressor to determine a value for a target quantization parameter to achieve the target value when compressing the particular frame of video data using the target quantization parameter;
wherein the dense neural network uses the extracted features, the normalization quantization parameter and the objective distortion metric associated to the particular frame as inputs to determine the value for the target quantization parameter; and
wherein the method further comprises encoding the particular frame with the target quantization parameter to generate an encoded frame.

According to a second aspect there is provided an apparatus comprising:

means for obtaining frames of video data for transmission;
means for providing the frames of the video data for rate control, wherein the rate control comprises:

means for obtaining a target value for at least one of an opinion score and a per-user opinion score;
means for obtaining a normalization quantization parameter;
means for using the normalization quantization parameter to encode and decode a particular frame of the video data, and calculating an objective distortion metric associated to the normalization quantization parameter for the particular frame;
means for executing a convolutional neural network to extract at least one feature indicative of at least one of perceptual quality and complexity of the particular frame in view of compression efficiency;
means for using a dense neural network, which has been previously trained using extracted features, normalization quantization parameters with their associated objective distortion metrics, and target quantization parameters that relate to target opinion scores of other frames of video data as inputs, and a regressor to determine a value for a target quantization parameter to achieve the target value when compressing the particular frame using the target quantization parameter;
wherein the dense neural network is configured to use the extracted features, the normalization quantization parameter and the objective distortion metric associated to the particular frame as inputs to determine the value for the target quantization parameter; and

means for encoding the particular frame with the target quantization parameter to generate an encoded frame.

According to a third aspect there is provided an apparatus comprising at least one processor; and at least one memory including computer program code the at least one memory and the computer program code configured to, with the at least one processor, cause the apparatus to perform at least the following:

obtain frames of video data for transmission;
provide the frames of the video data for rate control, wherein the rate control comprises:

obtain a target value for at least one of an opinion score and a per-user opinion score;
obtain a normalization quantization parameter;
use the normalization quantization parameter to encode and decode a particular frame of the video data, calculate an objective distortion metric associated to the normalization quantization parameter for the particular frame;
execute a convolutional neural network to extract at least one feature indicative of at least one of perceptual quality and complexity of the particular frame in view of compression efficiency;
use a dense neural network, which has been previously trained using extracted features, normalization quantization parameters with their associated objective distortion metrics, and target quantization parameters that relate to target opinion scores of other frames of video data as inputs, and a regressor to determine a value for a target quantization parameter to achieve the target value when compressing the particular frame using the target quantization parameter;

wherein the dense neural network uses the extracted features, the normalization quantization parameter and the objective distortion metric associated to the particular frame as inputs to determine the value for the target quantization parameter;
wherein said at least one memory includes computer program code configured to, with the at least one processor, further cause the apparatus to encode the particular frame with the target quantization parameter to generate an encoded frame.

According to a fourth aspect there is provided a computer program comprising computer readable program code which, when executed by at least one processor; cause the apparatus to perform at least the following:

obtain fames of video data for transmission;
provide the frames of the video data for rate control, wherein the rate control comprises:

obtain a target value for at least one of an opinion score and a per-user opinion score;
obtain a normalization quantization parameter;
use the normalization quantization parameter to encode and decode a frame of the video data, and calculate a distortion metric associated to the normalization quantization parameter for the particular frame;
execute a convolutional neural network to extract at least one feature indicative of at least one of perceptual quality and complexity of the particular frame in view of compression efficiency;
use a dense neural network, which has been previously trained using extracted features, normalization quantization parameters with their associated objective distortion metrics, and target quantization parameters that relate to target opinion scores of other frames of video data as inputs, and a regressor to determine a value for a target quantization parameter to achieve the target value when compressing the particular frame using the target quantization parameter;
wherein the dense neural network uses the extracted features, the normalization quantization parameter and the objective distortion metric associated to the particular frame as inputs to determine the value for the target quantization parameter;
wherein said computer program includes computer readable program code configured to, with the at least one processor, further cause the apparatus to encode the particular frame with the target quantization parameter to generate an encoded frame.

## BRIEF DESCRIPTION OF THE DRAWINGS

For a more complete understanding of example embodiments of the present invention, reference is now made to the following descriptions taken in connection with the accompanying drawings in which:

Fig. 1 shows an example architecture of a tele-operated driving system in which the examples may be practiced;
Fig. 2 shows a high-level diagram of an embodiment;
Fig. 3 illustrates example curves of possible bitrate variations with different rate-control approaches;
Fig. 4 shows an exemplary diagram how input video sequences may be utilized in training of a convolutional neural network for perceptual rate control, in accordance with an embodiment;
Fig. 5 shows relationships between a processed video sequence, per frame fast objective metric, per sequence subjective score and a quantization parameter, in accordance with an embodiment;
Fig. 6 shows a rate control training procedure as a block diagram, in accordance with an embodiment;
Fig. 7 shows a rate control inference procedure as a block diagram, in accordance with an embodiment;
Fig. 8 shows example curves of a user opinion score vs a mean opinion score for several users as a function of the bitrate;
Fig. 9 shows a block diagram of an apparatus in accordance with at least some embodiments; and
Fig. 10 shows a part of an exemplifying wireless communications access network in accordance with at least some embodiments.

## DETAILED DESCRIPTON OF SOME EXAMPLE EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment.

Neural networks (NN) are being utilized in an ever increasing number of applications for many different types of device, such as mobile phones. Examples include image and video analysis and processing, social media data analysis, device usage data analysis, etc.

A property of neural nets (and other machine learning tools) is that they are able to learn properties from input data, for example in supervised way or in unsupervised way. Such learning may be a result of a training algorithm, or of a meta-level neural network providing the training signal.

A neural network (NN) is a computation graph comprising several layers of computation. Each layer comprises one or more units, where each unit performs an elementary computation. A unit is connected to one or more other units, and the connection may have associated a weight. The weight may be used for scaling the signal passing through the associated connection. Weights are usually learnable parameters, i.e., values which can be learned from training data. There may be other learnable parameters, such as those of batch-normalization layers.

Two example architectures for neural networks are feed-forward and recurrent architectures. Feed-forward neural networks are such that there is no feedback loop: each layer takes input from one or more of the preceding layers and provides its output as the input for one or more of the subsequent layers. Also, units inside a certain layer take input from units in one or more of preceding layers, and provide output to one or more of following layers.

Initial layers (those close to the input data) extract semantically low-level features such as edges and textures in images, and intermediate and final layers extract more high-level features. After the feature extraction layers there may be one or more layers performing a certain task, such as classification, semantic segmentation, object detection, denoising, style transfer, super-resolution, etc. In recurrent neural nets, there is a feedback loop, so that the network becomes stateful, i.e., it is able to memorize information or a state.

The input layer receives the input data, such as images, and the output layer is task-specific and outputs an estimate of the desired data, for example a vector whose values represent a class distribution in the case of image classification. The "quality" of the neural network's output is evaluated by comparing it to ground-truth output data. The comparison may include a loss or cost function, run on the neural network's output and the ground-truth data. This comparison would then provide a "loss" or "cost" value.

The weights of the connections represent the biggest part of the learnable parameters of a neural network. Hereinafter, the terms "model", "neural network", "neural net" and "network" are used interchangeably, as well as the weights of neural networks are sometimes referred to as learnable parameters or simply as parameters. It is noted, for the sake of clarity, that the weights of neural networks referred to as parameters are different parameters than e.g. coding parameters of video codecs referred to above.

In general, the training algorithm may include changing some properties of the neural network so that its output is as close as possible to a desired output. For example, in the case of classification of objects in images, the output of the neural network can be used to derive a class or category index which indicates the class or category that the object in the input image belongs to. Training may include minimizing or decreasing the output's error, also referred to as the loss. Examples of losses are mean squared error, cross-entropy, etc. In deep learning techniques, training may be an iterative process, where at each iteration the algorithm modifies the weights of the neural net to make a gradual improvement of the network's output, i.e., to gradually decrease the loss.

The parameters are learned by means of a training algorithm, where the goal is to minimize the loss value on a training dataset and on a held-out validation dataset. In order to minimize such value, the network is run on a training dataset, a loss value is computed for the whole training dataset or for part of it, and the learnable parameters are modified in order to minimize the loss value on the training dataset. However, the performance of the training is evaluated on the held-out validation dataset. The training dataset is regarded as a representative sample of the whole data. One popular learning approach is based on iterative local methods, where the loss on the training dataset is minimized by following the negative gradient direction. Here, the gradient is understood to be the gradient of the loss with respect to the learnable parameters of the neural network. The loss may be represented by the reconstructed prediction error. Computing the gradient on the whole training dataset may be computationally too heavy, thus learning is performed in sub-steps, where at each step a mini-batch of data is sampled and gradients are computed from the mini-batch. This is referred to as stochastic gradient descent. The gradients are usually computed by back-propagation algorithm, where errors are propagated from the output layer to the input layer, by using the chain rule for differentiation. If the loss function or some operations performed by the neural network are not differentiable, it is still possible to estimate the gradient of the loss by using policy gradient methods, such as those used in reinforcement learning. The computed gradients are then used by one of the available optimization routines (such as stochastic gradient descent, Adam, RMSprop, etc.), to compute a weight update, which is then applied to update the weights of the network. After a full pass over the training dataset, the process is repeated several times until a convergence criterion is met, usually a generalization criterion. A generalization criterion may be derived from the loss value on the held-out validation dataset, for example by stopping the training when the loss value on the held-out validation dataset is less than a certain threshold. The gradients of the loss, i.e., the gradients of the reconstructed prediction error with respect to the weights of the neural network, may be referred to as the training signal.

In the context of training neural networks, an epoch refers to the time during which a neural network is used on all the training data, and it may comprise a plurality of iterations. An iteration refers to the time during which a neural network is used on a subset of the whole training data, typically referred to as a batch or mini-batch of data. Typically, an update to the weights of the neural network is performed at each iteration. In particular, a batch of data is input to the network, an output is obtained from the network, a loss is computed from the output, gradients of the loss with respect to the weights are computed, and weight updates are determined based on the computed gradients.

Training a neural network is an optimization process, but as a difference to a typical optimization where the only goal is to minimize a function, the goal of the optimization or training process in machine learning is to make the model to learn the properties of the data distribution. In other words, the goal is to learn to generalize to previously unseen data, i.e., data which was not used for training the model. This is usually referred to as generalization. In practice, data may be split into two (or more) sets, the training set and the validation set. The training set is used for training the network, i.e., to modify its learnable parameters to minimize the loss. The validation set is used for checking the performance of the network on data which was not used to minimize the loss, as an indication of the final performance of the model. In particular, the errors on the training set and on the validation set are monitored during the training process to understand the following issues:

If the network is learning at all - in this case, the training set error should decrease, otherwise we are in the regime of under fitting.

If the network is learning to generalize - in this case, also the validation set error needs to decrease and to be not too much higher than the training set error. If the training set error is low, but the validation set error is much higher than the training set error, or it does not decrease, or it even increases, the model is in the regime of overfitting. This means that the model has just memorized the training set's properties and performs well only on that set, but performs poorly on a set not used for tuning its parameters.

Neural networks may be used for compressing and de-compressing data, such as video/images in connection, for example, with video-related services. Such neural networks are usually trained to minimize a combination of bitrate and distortion, where the distortion may be measured by Mean Squared Error (MSE), Peak Signal-to-Noise Ratio (PSNR), Structural Similarity (SSIM) index, or similar, computed on the decoded data and the original data.

An example of new video-related services is Tele-operated Driving (ToD). Tele-operated driving can be seen as a side effect of tackling with potential issues that autonomous driving cannot solve by themselves. In this case human intervention might be required to drive the car. Depending on the level of implication of the remote operator in the act of driving, different ToD types may be defined. Table 1 below shows examples of the role and engagement of the ToD operator in the act of driving in different types of ToD. This example is provided by the 5G Automotive Association (5GAA) in the document "Tele-Operated Driving (ToD): Business Considerations, published on 12 July 2021. It should be noted that tele-operated driving is only one example where embodiments of the disclosure may be utilized.

Different ToD types are defined based on the act of driving. Examples of the ToD types are presented below in Table 1.

| ToD Type | Act of Driving | | |
|---|---|---|---|
| | Strategic Operation (Travel planning, route and itinerary selection) | Dynamic Driving Task (DDT) | |
| (Role of ToD operator when engaging in the act of driving) | | Tactical Operation (Object and Event Detection and Response OEDR) | Operational Operation (Sustained lateral and longitudinal vehicle motion control) |
| 0: Non-ToD (No Role) | In-vehicle user or system | In-vehicle user or system | |
| 1: Dispatch ToD (Dispatcher) | ToD operator | In-vehicle user or system | In-vehicle user or system |
| 2: Indirect Control ToD (Indirect Controller) | ToD operator | ToD operator | In-vehicle user or system |
| 3: Direct Control ToD (Direct Controller) | ToD operator | ToD operator | ToD operator |

In the following, some explanations of the terms used in Table 1 will be shortly provided.

In Type 0 the ToD operator is not engaged in the act of driving. In other words, the ToD is taking no role in the act of driving. All three levels of driving operations, i.e. Strategic level, Tactical level, and Real-Time Operational and Real-time Tactical level, are performed by an in-vehicle user or system such as a driving automation system. In this case the ToD operator may monitor the status of the vehicle and send information to the in-vehicle user or system supporting the act of driving.

In Type 1 the ToD operator takes on the role of Dispatcher, which is only to perform the Strategic level operations of driving, e.g. travel planning, route and itinerary selection, while the Tactical and Operational level operations are performed by the in-vehicle user or system.

In Type 2 the ToD operator takes the role of Indirect Controller (Remote Assistant), to perform the Tactical level functions like pathway planning, which corresponds to the remote assistance function defined for driving automation systems. If needed, the Indirect Controller may also perform Strategic level operations of driving. In this type real-time Operational level and real-time Tactical level functions, i.e. Dynamic Driving Task (DDT), are performed by in-vehicle user or system. When engaged in the act of driving, the remote operator of Indirect Control ToD may disengage the in-vehicle system from performing DDT, by either taking over all DDT tasks, i.e., the role of Direct Controller, or by bringing the vehicle to a minimal risk condition. When Indirect Control ToD is engaged, the ToD operator may also perform Strategic level operations such as reselecting the route, when such operations are needed to complete the act of driving, e.g. to avoid a blocked road.

In Type 3 the ToD operator takes the role of Direct Controller (Remote Driver), to perform all or part of real-time operational and real-time tactical functions (i.e. DDT), which corresponds to the remote driving function defined for driving automation systems. If needed, the Direct Controller may also perform Tactical and Strategic level operations of driving. When Direct Control ToD is engaged, part of the DDT functions, e.g. lateral and/or longitudinal vehicle motion control, may be performed by the In-vehicle user or system, e.g. through adaptive cruise control and/or lane keeping, while the ToD operator is still responsible for the OEDR task. When Direct Control ToD is engaged, the ToD operator may also perform Strategic level operations such as reselecting the route and Tactical level operations such as replanning the pathway, when such operations are needed to complete the act of driving, e.g. to avoid a blocked road or get around an obstacle in the road.

For the purposes of this disclosure, the types under consideration are the ones where part of or all of the dynamic driving tasks are performed by a remote driver on a sustained basis. Using the definitions of Table 1 these types are ToD Type 2 or 3.

Although several implementations of the ToD service are possible, a typical reference architecture assumes that there are four cameras boarded on the vehicle, one at each side i.e. in the front, in the back, in the left side and in the right side of the vehicle, as well as other sensors (positioning system, radar, lidar, etc.). Information coming from those sources may be processed by an On-Board Unit (OBU) and sent through a 5G network to a remote driver cockpit. The cockpit may have several screens, or maybe a virtual environment using virtual reality (VR) equipment (e.g. VR glasses), where the video from the cameras is displayed, as well as the information from the sensors. Besides, the cockpit contains remote control (e.g. a driving wheel, a throttle) whose information is also sent back to the car.

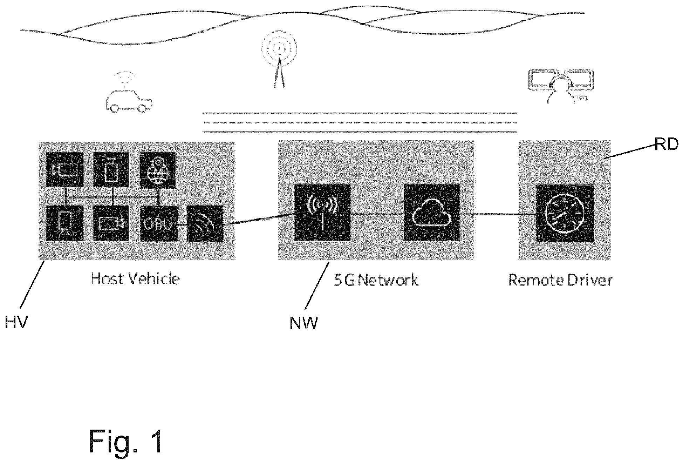

Fig. 1 illustrates an example architecture of a ToD system. The host vehicle (HV) is the object of the ToD operations performed by a remote driver (RD). Communication between the host vehicle and the remote driver may be performed via a wireless communication network (NW) such as a 5G network.

In a so-called mission-critical tasks where latency i.e. the time between transmission of a signal by a transmitter and reception of the signal by a receiver should not exceed a value defined for such mission-critical task, the coding system should try to ensure that a minimum level of quality is always guaranteed. However, lowering bitrate while keeping perceptual quality may not be a straightforward task when dealing with mission-critical tasks.

In order of efficiency, several strategies for lowering bitrate may be possible.

One strategy is performing compressing using constant quality instead of constant bitrate. As an example, instead of using a certain bitrate such as 8 Mbps, a certain quantization parameter (QP) such as QP ≈ 22 is used. The quantization parameter is related to perceptual quality, but this relation is not perfect. Therefore, to achieve a good perceptual quality in all situations, a low QP should be selected (i.e. a safety margin may still be needed).

Another strategy is using perceptually-constant quality compression. For example, instead of using a certain quantization parameter value such as QP ≈ 22, the data to be transmitted is compressed so that a so-called Mean Opinion Score (MOS) is higher than or equal to a predetermined value (e.g MOS ≥ 4.5).

The MOS can be calculated as

$$\hat{\psi}_j = \frac{1}{N} \sum_{i=1}^{N} u_{i,j,r=1}$$

where $u_{i,j,r}$ is the observed rating for subject *I*, a processed video sequence *j*, repetition *r* and N is the number of subjects.

Even though the latter strategy may be better than constant quantization parameter, it is worth noting that the Mean Opinion Score is the opinion of a "mean user". A high level of MOS may need to be selected to satisfy even the most critical users.

Still another strategy is to use per-user perceptual model. Instead of defining a lower limit to the MOS, a personalized encoding may be created for each user so that a User Opinion Score (UOS) is higher than or equal to a predetermined limit. For example, UOS ≥ 4.0 may be defined.

The above-mentioned Mean Opinion Score is a measure, which can be used when estimating quality of experience, representing overall quality of a stimulus or system. According to one definition, MOS is the arithmetic mean over all individual "values on a predefined scale that a subject assigns to his opinion of the performance of a system quality". Such ratings may usually be gathered in a subjective quality evaluation test, but they can also be algorithmically estimated. The MOS may be expressed as a single rational number, for example in the range 1-5, where 1 is the lowest perceived quality, and 5 is the highest perceived quality. However, other rating scales may also be used and it may also be possible to use a more dense scaling, such as 0.5, 1.0, 1.5, 2.0, ..., 4.5, 5.0.

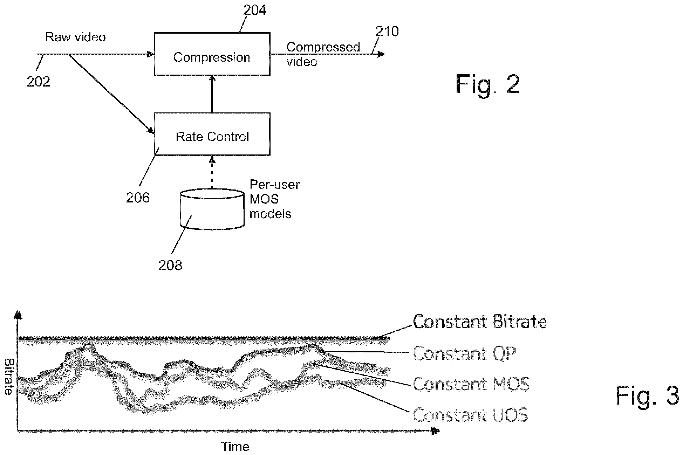

Fig. 2 shows a high-level diagram of an embodiment, in which raw video 202 is input to a compression block 204 to produce compressed video 210. The raw video is also input to a rate control block 206 which also receives from a per-user MOS model database 208 MOS model which has been generated for that particular user who is performing the tele-operated driving tasks with the host vehicle. The rate control block 206 uses the retrieved per-user MOS model to determine an appropriate value for the QP parameter so that the desired MOS can be achieved when compressing the raw video.

Fig. 3 illustrates some example curves of possible bitrate variations with different rate-control approaches: constant bitrate, constant QP, constant MOS and constant UOS. It should be noted that these curves are illustrative only and different savings compared to the constant bitrate approach may be achieved in different situations.

In the following, some details of a perceptual-quality optimized rate control will be described, in accordance with an embodiment.

At a data collection step data for training an apparatus is collected using representative original content sequences (SRC) from a database as inputs to a training phase. The apparatus is trained to be effective for a known client device, characterized by an optimal resolution, at which some metrics are calculated.

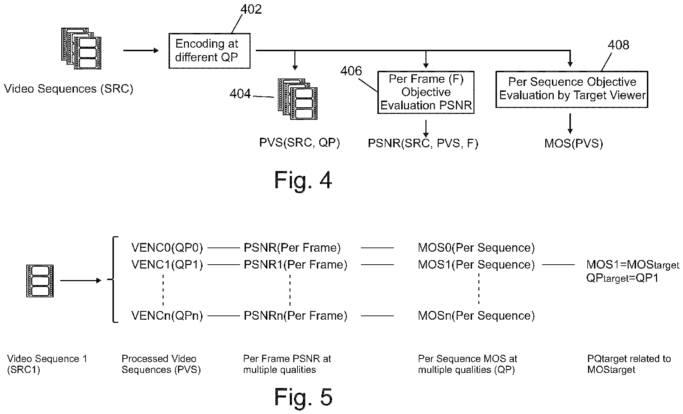

Fig. 4 illustrates the data collection process, in accordance with an embodiment. The original content sequences have been compressed by a compressing block 402 with different quantization parameter values QPn to obtain processed video sequences (PVS), which may be stored 404 to a memory attached with information of the video sequence and the quantization parameter used in the compressing. The processed video sequences are provided to a first evaluator 406 and a second evaluator 408. The first evaluator 406 performs for each frame a so-called fast objective metric evaluation such as a Peak Signal to Noise Ratio (PSNR) evaluation related to encoding with a fixed QP to obtain objective evaluation values PSNR(SRC, PVS, F) for the frames. The second evaluator 408 evaluates for each video sequence a subjective score such as MOS related to encoding with a fixed QP. This may be achieved with subjective assessment tests using ITU-T P.913 or a similar methodology, for example.

The minimum QP value ($QP_{target}$) required to reach a target MOS ($MOS_{target}$) is derived from the subjective scores.

Fig. 5 shows a relationship between PVS, PSNR, MOS and QP, and MOS1 selected as $MOS_{target}$ as an example of determination of the minimum QP value to reach the target MOS.

Next, an example of the training phase will be described.

An aim of the training is to enable a neural network to infer a target value for the quantization parameter $QP_{target}$, which may be used to encode the frame, that will give a $MOS_{target}$ objective quality, given the following:

- Frame complexity (features),
- QP and related PSNR, used as normalization parameters.

The inputs of the training are the frame to be encoded (SRC Frame), a normalization QP used as a hyperparameter, and an objective metric evaluation value (e.g. PSNR) of the current frame encoded using the normalization QP. The encoded sequence (PVS) calculated at the optimal resolution is compared against the original sequence (SRC).

The training produces the target QP value $QP_{target}$ as the output. That relates to the expected $MOS_{target}$ and represents the expected quality for that image.

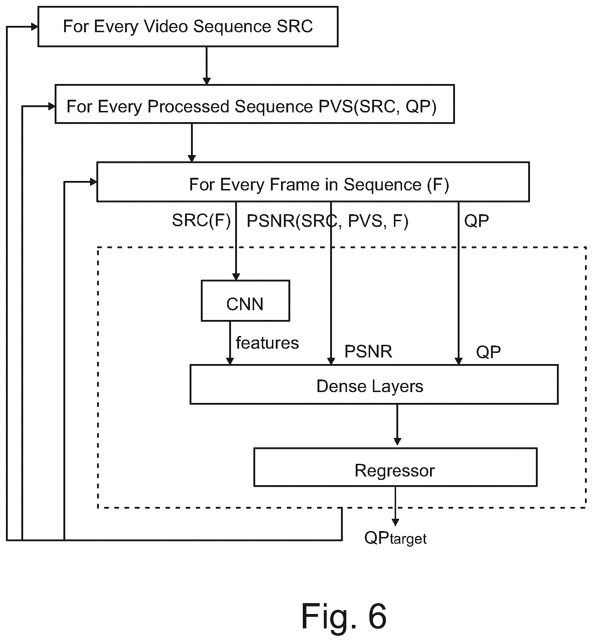

The training process is represented in Fig. 6. The training process is performed for each source video sequence SRC used for the training. One target MOS value $MOS_{target}$ have been selected for the training.

For each image the training comprises extracting features with a convolutional neural network (CNN) and training the PSNR (for the image compressed with QPn) and QPn.

The training also comprises tuning the hyperparameter so that the best QP for normalization ($QP_N$) may be selected in evaluation among all QPn values.

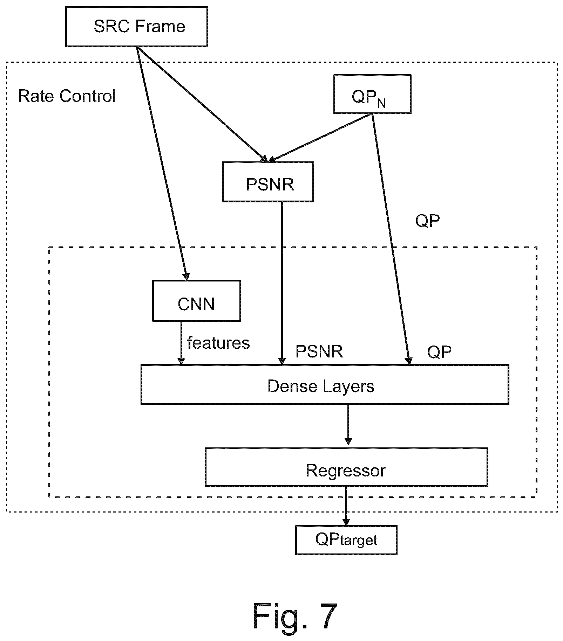

After training an inference process may be performed. An example of the inference process is depicted in Fig. 7. For each source frame to be encoded, features are extracted by the convolutional neural network. The features to be extracted may be indicative of perceptual quality of the frames, complexity of the frame (i.e. contents of the visual information of the frame) in view of compression efficiency. For example, the features may indicate that the frame has a large number of details which may reduce efficiency of the compression or may require coarser quantization of pixel values of the frame, whereas if the visual information of the frame has much less details the compression may be performed more efficiently than with a frame with more details. Some features may relate to spatial properties of the frame, temporal properties of a sequence of frames etc. A normalization QP ($QP_N$) to execute PSNR values, and expected MOS after encoding i.e. the $MOS_{target}$, are also used as inputs of the inference process together with the source frame to be encoded (SRC Frame). The source frame is encoded with the normalization QP and the PSNR is computed, which is provided together with the corresponding QP value to dense layers of the neural network. Also the expected MOS value MOSx is provided to the dense layers. As a result of the inference, the neural network outputs an optimal target value of the quantization parameter $QP_{target}$ at which the image should be encoded to get the expected $MOS_{target}$.

The system utilizes computation of convolutional neural networks (not too deep). This can be implemented in real-time in platforms embeddable e.g. in cars or similar systems.

As the sequence characteristics do not change abruptly, computation can be done once for each N frames, lowering requirements, with minimum performance loss. For example, using QP cascading, the method may be applied to "key" frames (e.g. the lowest temporal sublayer) and heuristic QP cascading may be applied for the other frames of the hierarchy.

Real-time computation can be done with less than one frame of delay. If computation is done from a previous frame, no latency may be introduced.

If the apparatus, such as a tele-operated vehicle, computes only the PSNR, QP computation can even be done on a cloud implemented in a communication network, e.g. as a cloud service.

In the following, some details of implementing a per-user opinion model with the above described training and inference processes will be described.

According to a subjective experiment, each user who took part the experiment, repeated the same subjective test 10 times in different days. Based on the results of the experiment, a user opinion score (UOS) was computed for each user as an average of these ten repetitions.

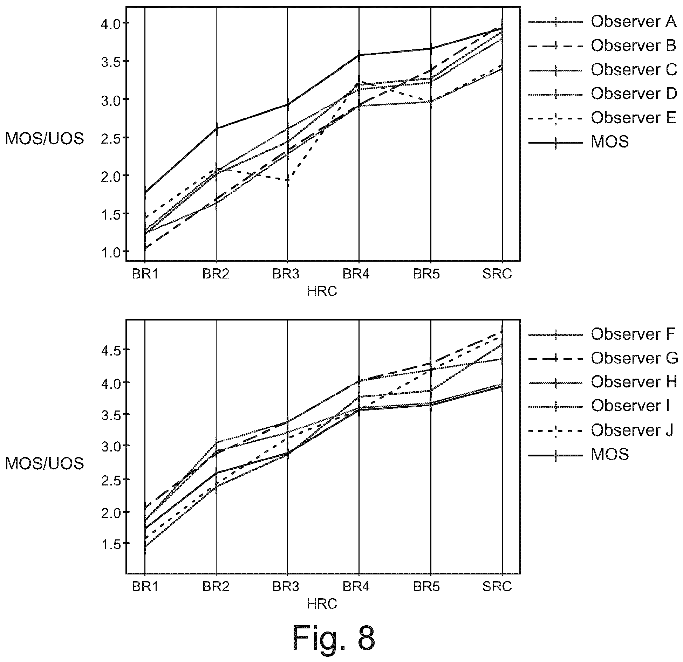

Fig. 8 shows the UOS of 10 of the users (Observer A to Observer J) that took place in the experiment, and its comparison with the global MOS. The x-axis (HRC) shows the coding bitrate of the videos (labeled as BR1 to BR5, plus the original uncompressed SRC).

It can be concluded from the results that UOS can be significantly different from MOS.

The UOS can be approximated by:

$$\bar{u}_{i,j} = E\left[U_{ijr}\right] = \psi_j + \Delta_i$$

where $U_{ijr}$ is a random variable representing the subjective scoring of a user $i$ of a processed video sequence j in the repetition $r$, E[·] represents the expected value of the random variable across a series of repetitions, $\psi_j$ is the MOS of PVS $j$ and $\Delta_i$ is the bias of a user $i$, computed as the mean difference between the user scores and the MOS.

Based on this analysis, the UOS can be applied to the algorithm presented above in the following way.

A set of video sequences which are representative of all the conditions of a case is obtained. These video sequences may be obtained, for example, by a car having one or more cameras (a camera car) and capturing videos in different situations. These video sequences are compressed with all QPs selected for the training. The sequences are evaluated once by a pool of representative users to obtain MOS using e.g. a standard methodology (e.g. ITU-T P.913). The number of users M may be, for example, 16-24 observers (subjects) but also other amount of observers may be used.

Based on this test, the UOS may be obtained in an "approximate" way or in an "exact" way.

In the approximate way each of the observers performs the subjective test once and a global user bias is obtained from results from all observers. The UOS is the MOS $\psi_j$ plus the bias $\Delta_i$:

UOS = MOS + BIAS, i.e.

$$\hat{u}_{i,j} = \bar{\psi}_j + \Delta_i = \bar{\psi}_j + \frac{1}{M} \sum_{j=1}^{M} \left( u_{x,j,r=1} - \bar{\psi}_j \right)$$

In the exact way each of the observers performs the subjective test R times (e.g. R=10). Then the UOS is computed as

$$\widehat{u_{i,j}} = \frac{1}{R} \sum_{r=1}^{R} u_{i,j,r}$$

i.e. when R=10, the equation becomes

$$\hat{u}_{i,j} = \frac{1}{10} \sum_{r=1}^{10} u_{i,j,r}$$

When the UOS has been calculated it is used instead of MOS to train the rate control algorithm, as described above.

According to some evaluations, when using UOS instead of MOS may allow to target 0.5 MOS points less that with MOS. Negatively-biased users at e.g. UOS=4.0 may use the same bitrate as MOS=4.5 thus there will be no bitrate savings for them. Neutral users at UOS=4.0 may save 20% of bitrate with respect to using MOS=4.5. Positively-biased users at UOS=4.0 may save 50% of bitrate with respect to using MOS=4.5.

These are example figures extrapolated from some experiments. Actual numbers will depend on the use case, and they may vary.

For each user, there is a trained rate control which may be loaded in the vehicle so that the user preferences will be taken into account in ToD.

However, the approach is general and can be used to train other metrics and therefore use UOS with other state-of-the art Rate Controllers, with similar gains.

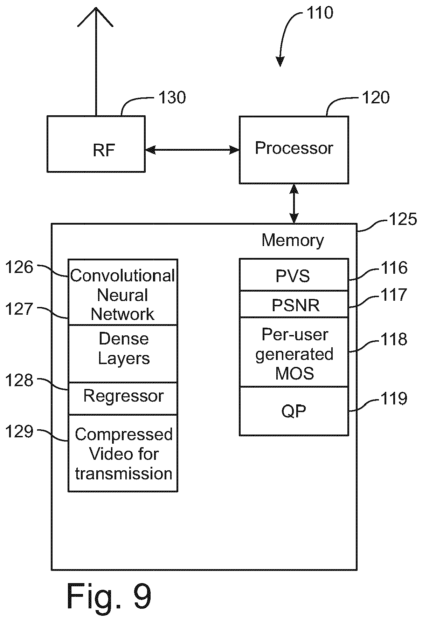

The following describes in further detail a suitable apparatus and possible mechanisms for running a neural network according to embodiments. Fig. 9 shows an example block diagram of an apparatus 110. The apparatus may be a driving automation system implemented in a vehicle for autonomous driving or it may be another apparatus capable of transmitting video data. As a further example, the apparatus may be an Internet of Things (IoT) apparatus configured to perform various functions, such as for example, gathering information by one or more sensors, receiving or transmitting information, analyzing information gathered or received by the apparatus, or the like. The apparatus may comprise a video coding system, which may incorporate a codec. The apparatus 110 may be, for example, a part of the tele-operated vehicle, such as the on-board unit of Fig. 1.

The apparatus 110 comprises a processor 120, a memory 125 and a transceiver 130. The processor is operatively connected to the transceiver for controlling the transceiver. The memory may be operatively connected to the processor 120. It should be appreciated that the memory 125 may be a separate memory or included to the processor and/or the transceiver. The memory 125 may be used to store information, for example, about maximum length, allowed causes, default values for some parameters and/or for some other information.

Fig. 9 also illustrates the operational units as a computer code stored in the memory, but they may also be implemented using hardware components or as a mixture of computer code and hardware components.

Fig. 9 shows the CNN 126, dense layers 127 and the regressor 128 as computer code blocks, but their implementation may also comprise hardware. The memory 125 is also showing some parameters like PVS 116, PSNR 117, per-user generated MOS 118 and QP 119 in Fig. 9 as well as a memory area 129 reserved for compressed video for transmission.

According to an embodiment, the processor is configured to control the transceiver and/or to perform one or more functionalities described with a method according to an embodiment. Inter alia, the processor 120 is configured to execute the convolutional neural network at least when the tele-operated driving operations are in use. The processor 120 may also be configured to execute the convolutional neural network at the training phase.

A memory may be a computer readable medium that may be non-transitory. The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general-purpose computers, special purpose computers, microprocessors, digital signal processors (DSPs) and processors based on multi-core processor architecture, as non-limiting examples.

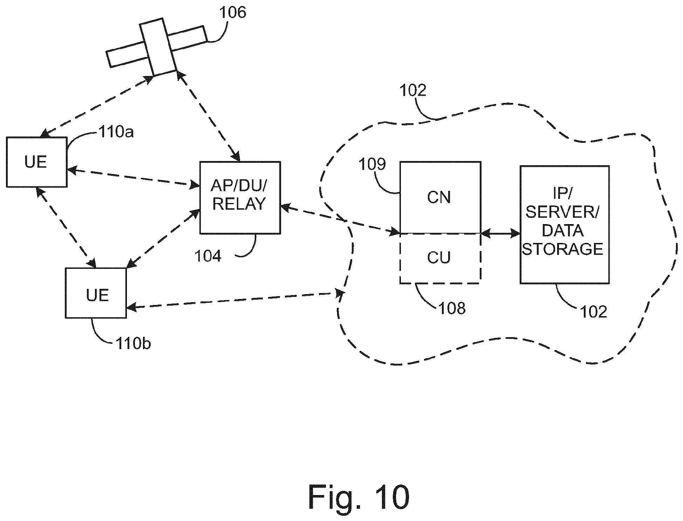

In the following, an example of an access architecture is described with reference to Fig. 10. The radio access architecture may be based on Long Term Evolution Advanced (LTE Advanced, LTE-A) or new radio (NR, 5G), without restricting the embodiments to such an architecture, however. It is obvious for a person skilled in the art that the embodiments may also be applied to other kinds of communications networks having suitable means by communicating with the tele-operated driving service. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet protocol multimedia subsystems (IMS) or any combination thereof.

Fig. 10 depicts examples of simplified system architectures only showing some elements and functional entities, all being logical units, whose implementation may differ from what is shown. The connections shown in Fig. 10 are logical connections; the actual physical connections may be different. It is apparent to a person skilled in the art that the system typically comprises also other functions and structures than those shown in Fig. 10.

The embodiments are not, however, restricted to the system given as an example but a person skilled in the art may apply the solution to other communication systems provided with necessary properties.

Fig. 10 shows user equipments 110a and 110b configured to be in a wireless connection on one or more communication channels in a cell with an access node (such as (e/g)NodeB) 104 providing the cell. The physical link from a user equipment to a (e/g)NodeB is called uplink or reverse link and the physical link from the (e/g)NodeB to the user equipment is called downlink or forward link. It should be appreciated that (e/g)NodeBs or their functionalities may be implemented by using any node, host, server or access point etc. entity suitable for such a usage.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user equipments. The antenna unit may comprise a plurality of antennas or antenna elements. The (e/g)NodeB is further connected to core network 109 (CN or next generation core NGC). Depending on the system, the counterpart on the CN side can be a serving gateway (S-GW, routing and forwarding user data packets), packet data network gateway (P-GW), for providing connectivity of user equipments (UEs) to external packet data networks, or mobile management entity (MME), etc. The CN may comprise network entities or nodes that may be referred to management entities. Examples of the network entities comprise at least an Access management Function (AMF).

The user equipment (also called a user device, a user terminal, a terminal device, a wireless device, a mobile station (MS) etc.) illustrates one type of an apparatus to which resources on the air interface are allocated and assigned, and thus any feature described herein with a user equipment may be implemented with a corresponding network apparatus, such as a relay node, an eNB, and an gNB. An example of such a relay node is a layer 3 relay (self-backhauling relay) towards the base station.

The user equipment typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user equipment may also be a nearly exclusive uplink only device, of which an example is a camera or video camera loading images or video clips to a network. A user equipment may also be a device having capability to operate in Internet of Things (IoT) network which is a scenario in which objects are provided with the ability to transfer data over a network without requiring human-to-human or human-to-computer interaction. The user equipment may also utilize cloud. In some applications, a user equipment may comprise a small portable device with radio parts (such as a watch, earphones or eyeglasses) and the computation is carried out in the cloud. The user equipment (or in some embodiments a layer 3 relay node) is configured to perform one or more of user equipment functionalities. The user equipment may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 10) may be implemented.

The communication system is also able to communicate with other networks, such as a public switched telephone network or the Internet 102, or utilize services provided by them. The communication network may also be able to support the usage of cloud services, for example at least part of core network operations may be carried out as a cloud service (this is depicted in Fig. 10 by "cloud" 102). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well. The gNB is a next generation Node B (or, new Node B) supporting the 5G network (i.e., the NR).

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the user equipment may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 10 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

Embodiments may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialized circuits such as field programmable gate arrays FPGA, application specify circuits ASIC, signal processing devices and other devices. References to computer readable program code means, computer program, computer instructions, computer code etc. should be understood to express software for a programmable processor firmware such as the programmable content of a hardware device as instructions for a processor or configured or configuration settings for a fixed function device, gate array, programmable logic device, etc.

Although the above examples describe embodiments of the invention operating within a wireless device or a gNB, it would be appreciated that the invention as described above may be implemented as a part of any apparatus comprising a circuitry in which radio frequency signals are transmitted and/or received. Thus, for example, embodiments of the invention may be implemented in a mobile phone, in a base station, in a computer such as a desktop computer or a tablet computer comprising radio frequency communication means (e.g. wireless local area network, cellular radio, etc.).

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules, field-programmable gate arrays (FPGA), application specific integrated circuits (ASIC), microcontrollers, microprocessors, a combination of such modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

As used in this application, the term "circuitry" may refer to one or more or all of the following:

(a) hardware-only circuit implementations (such as implementations in only analogue and/or digital circuitry) and
(b) combinations of hardware circuits and software, such as (as applicable):

(i) a combination of analogue and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention, which is defined by the appended claims.

**Claims**

1. A method comprising

    obtaining, in an encoder, frames of video data for transmission;
    providing the frames of the video data for rate control, wherein the rate control comprises:

      obtaining a target value for at least one of an opinion score and a per-user opinion score;
      obtaining a normalization quantization parameter;
      using the normalization quantization parameter to encode and decode a particular frame of the video data, calculating an objective distortion metric associated to the normalization quantization parameter for the particular frame;
      executing a convolutional neural network to extract at least one feature indicative of at least one of perceptual quality and complexity of the particular frame in view of compression efficiency;
      using a dense neural network and a regressor to determine a value for a target quantization parameter to achieve the target value when compressing the particular frame using the target quantization parameter, wherein the dense neural network has been previously trained using, as inputs, (i) extracted features of training frames of video data, (ii) normalization quantization parameters having been used to encode said training frames, with their associated objective distortion metrics, and (iii) target quantization parameters that relate to target opinion scores expected after encoding said training frames;
      wherein the dense neural network uses the extracted features, the normalization quantization parameter and the objective distortion metric associated to the particular frame as inputs to determine the target quantization parameter; and
      wherein the method further comprises encoding the particular frame with the target quantization parameter to generate an encoded frame.

2. An apparatus comprising

    means for obtaining frames of video data for transmission;
    means for providing the frames of the video data for rate control, wherein the rate control comprises:

      means for obtaining a target value for at least one of an opinion score and a per-user opinion score;
      means for obtaining a normalization quantization parameter;
      means for using the normalization quantization parameter to encode and decode a particular frame of the video data, and for calculating an objective distortion metric associated to the normalization quantization parameter for the particular frame;
      means for executing a convolutional neural network to extract at least one feature indicative of at least one of perceptual quality and complexity of the particular frame in view of compression efficiency;
      means for using a dense neural network and a regressor to determine a value for a target quantization parameter to achieve the target value when compressing the frame using the target quantization parameter, wherein the dense neural network has been previously trained using, as inputs, (i) extracted features of training frames of video data, (ii) normalization quantization parameters having been used to encode said training frames, with their associated objective distortion metrics, and (iii) target quantization parameters that relate to target opinion scores expected after encoding said training frames;
      wherein the dense neural network uses the extracted features, the normalization quantization parameter and the objective distortion metric associated to the particular frame as inputs to determine the target quantization parameter; and
      means for encoding the particular frame with the target quantization parameter to generate an encoded frame.

3. The apparatus according to claim 2, wherein the video data comprises a plurality of frames, wherein said means for using a dense neural network are configured to determine the value for the target quantization parameter once for every N frames of the plurality of frames, where N is greater than 1.

4. The apparatus according to claim 2 or 3, wherein the video data comprises two or more temporal sublayers at different levels, wherein said means for using a dense neural network are configured to determine the value for the target quantization parameter only for frames at a lowest temporal sublayer among the two or more temporal sublayers.

**5.** The apparatus according to claim 2, 3 or 4 further comprising:
means for obtaining a target quantization parameter related to a target opinion score on the basis of the particular frame encoded with one of different values of the quantization parameter;
wherein the apparatus is configured to evaluate the opinion score based on the target opinion score.

**6.** The apparatus according to any of the claims 2 to 5, wherein the means for obtaining a normalization quantization parameter are configured to receive the normalization quantization parameter from a cloud service of a communication network.

**7.** The apparatus according to any of the claims 2 to 6 further comprising:
means for computing the score by one of the following:

$$\hat{\psi}_j = \frac{1}{N} \sum_{i=1}^{N} u_{i,j,r=1}$$

$$\hat{u}_{i,j} = \hat{\psi}_j + \Delta_i = \hat{\psi}_j + \frac{1}{M} \sum_{j=1}^{M} \left( u_{i,j,r=1} - \hat{\psi}_j \right)$$

$$\widehat{u_{i,J}} = \frac{1}{R} \sum_{r=1}^{R} u_{i,j,r}$$

wherein N is the number of subjects,
M is the number of users,
R is a number of subjective tests performed by a number of observers,
$u_{i,j,r}$ is an opinion score value by an observer i,
j is a jth processed video sequence, and
r is the rth repetition of the test.

**8.** The apparatus according to any of the claims 2 to 7 further comprising:
means for training the convolutional neural network by using a set of source frames.

**9.** The apparatus according to claim 8, wherein the means for training are configured to:

obtain the target value;
obtain the normalization quantization parameter for each source frame;
train one convolutional neural network for each normalization quantization parameter.

**10.** The apparatus according to any of the claims 2 to 9, wherein the apparatus is one of the following:

a vehicle comprising means for teleoperated driving;
an internet of things apparatus.

**11.** The apparatus according to claim 2, comprising at least one processor and at least one memory, wherein the means are each implemented as a computer code stored in said at least one memory and which, when executed by said at least one processor, cause said at least one processor to carry out the respective steps of the method of claim 1.

**12.** The apparatus according to claim 11, wherein the video data comprises a plurality of frames, wherein said at least one memory includes computer program code configured to, with the at least one processor, further cause the apparatus to determine the value for the target quantization parameter once for every N frames of the plurality of frames, where N is greater than 1.

**13.** The apparatus according to claim 11 or 12, wherein the video data comprises two or more temporal sublayers at different levels, wherein said at least one memory includes computer program code configured to, with the at least one processor, further cause the apparatus to determine the value for the target quantization parameter only for frames at a lowest temporal sublayer among the two or more temporal sublayers.

14. The apparatus according to claim 11, 12 or 13 said at least one memory includes computer program code configured to, with the at least one processor, further cause the apparatus to:

obtain a target quantization parameter related to a target opinion score on the basis of the frame encoded with one of different values of the quantization parameter; and
evaluate the opinion score based on the target opinion score.

15. The apparatus according to any of the claims 11 to 14, said at least one memory includes computer program code configured to, with the at least one processor, further cause the apparatus to:
receive the normalization quantization parameter from a cloud service of a communication network.

**Patentansprüche**

1. Verfahren, umfassend

das Erhalten von Frames von Videodaten zur Übertragung in einem Codierer;
das Bereitstellen der Frames der Videodaten für Ratensteuerung, wobei die Ratensteuerung Folgendes umfasst:

das Erhalten eines Zielwertes für mindestens einen von einem Opinion-Score und einem Opinion-Score pro Benutzer;
das Erhalten eines Normierungs-Quantisierungs-Parameters;
das Verwenden des Normierungs-Quantisierungs-Parameters zum Codieren und Decodieren eines bestimmten Frames der Videodaten;
das Berechnen einer objektiven Verzerrungsmetrik in Verbindung mit dem Normierungs-Quantisierungs-Parameter für den bestimmten Frame;
das Ausführen eines neuronalen Faltungsnetzwerks, um mindestens ein Merkmal zu extrahieren, das mindestens eines von Wahrnehmungsqualität und -komplexität des bestimmten Frames im Hinblick auf Komprimierungseffizienz angibt;
das Verwenden eines dichten neuronalen Netzwerks und eines Regressors zum Bestimmen eines Wertes für einen Zielquantisierungsparameter, um den Zielwert zu erreichen, wenn der bestimmte Frame unter Verwendung des Zielquantisierungsparameters komprimiert wird, wobei das dichte neuronale Netzwerk zuvor unter Verwendung von (i) extrahierten Merkmalen von Training-Frames von Videodaten, (ii) Normierungs-Quantisierungs-Parametern, die zum Codieren der Training-Frames verwendet worden sind, mit ihren zugehörigen objektiven Verzerrungsmetriken und (iii) Zielquantisierungsparametern, die sich auf Ziel-Opinion-Scores beziehen, die nach dem Codieren der Training-Frames erwartet werden, als Eingaben trainiert worden ist;
wobei das dichte neuronale Netzwerk die extrahierten Merkmale, den Normierungs-Quantisierungs-Parameter und die objektive Verzerrungsmetrik in Verbindung mit dem bestimmten Frame als Eingaben zum Bestimmen des Zielquantisierungsparameters nutzt; und
wobei das Verfahren ferner das Codieren des bestimmten Frames mit dem Zielquantisierungsparameter unter Erzeugung eines codierten Frames umfasst.

2. Gerät, umfassend

Mittel zum Erhalten von Frames von Videodaten zur Übertragung;
Mittel zum Bereitstellen der Frames der Videodaten für Ratensteuerung, wobei die Ratensteuerung Folgendes umfasst:

Mittel zum Erhalten eines Zielwertes für mindestens einen von einem Opinion-Score und einem Opinion-Score pro Benutzer;
Mittel zum Erhalten eines Normierungs-Quantisierungs-Parameters;
Mittel zum Verwenden des Normierungs-Quantisierungs-Parameters zum Codieren und Decodieren eines bestimmten Frames der Videodaten und zum Berechnen einer objektiven Verzerrungsmetrik in Verbindung mit dem Normierungs-Quantisierungs-Parameter für den bestimmten Frame;

Mittel zum Ausführen eines neuronalen Faltungsnetzwerks, um mindestens ein Merkmal zu extrahieren, das mindestens eines von Wahrnehmungsqualität und -komplexität des bestimmten Frames im Hinblick auf Komprimierungseffizienz angibt;

Mittel zum Verwenden eines dichten neuronalen Netzwerks und eines Regressors zum Bestimmen eines Wertes für einen Zielquantisierungsparameter, um den Zielwert zu erreichen, wenn der bestimmte Frame unter Verwendung des Zielquantisierungsparameters komprimiert wird, wobei das dichte neuronale Netzwerk zuvor unter Verwendung von (i) extrahierten Merkmalen von Training-Frames von Videodaten, (ii) Normierungs-Quantisierungs-Parametern, die zum Codieren der Training-Frames verwendet worden sind, mit ihren zugehörigen objektiven Verzerrungsmetriken und (iii) Zielquantisierungsparametern, die sich auf Ziel-Opinion-Scores beziehen, die nach dem Codieren der Training-Frames erwartet werden, als Eingaben trainiert worden ist;

wobei das dichte neuronale Netzwerk die extrahierten Merkmale, den Normierungs-Quantisierungs-Parameter und die objektive Verzerrungsmetrik in Verbindung mit dem bestimmten Frame als Eingaben zum Bestimmen des Zielquantisierungsparameters nutzt; und

Mittel zum Codieren des bestimmten Frames mit dem Zielquantisierungsparameter unter Erzeugung eines codierten Frames.

3. Gerät nach Anspruch 2, wobei die Videodaten mehrere Frames umfassen, wobei die Mittel zum Verwenden eines dichten neuronalen Netzwerks dafür ausgelegt sind, den Wert für den Zielquantisierungsparameter einmal für alle N Frames der mehreren Frames zu bestimmen, wobei N größer ist als 1.

4. Gerät nach Anspruch 2 oder 3, wobei die Videodaten zwei oder mehr temporale Teilschichten auf verschiedenen Ebenen umfassen, wobei die Mittel zum Verwenden eines dichten neuronalen Netzwerks dafür ausgelegt sind, den Wert für den Zielquantisierungsparameter nur für Frames auf einer untersten temporalen Teilschicht von den zwei oder mehr temporalen Teilschichten zu bestimmen.

5. Gerät nach Anspruch 2, 3 oder 4, ferner umfassend:

Mittel zum Erhalten eines Zielquantisierungsparameters, der sich auf einen Ziel-Opinion-Score bezieht, auf der Grundlage des bestimmten Frames, der mit einem von verschiedenen Werten des Quantisierungsparameters codiert wurde;

wobei das Gerät dafür ausgelegt ist, den Opinion-Score basierend auf dem Ziel-Opinion-Score auszuwerten.

6. Gerät nach einem der Ansprüche 2 bis 5, wobei die Mittel zum Erhalten eines Normierungs-Quantisierungs-Parameters dafür ausgelegt sind, den Normierungs-Quantisierungs-Parameter von einem Cloud-Service eines Kommunikationsnetzwerkes zu empfangen.

7. Gerät nach einem der Ansprüche 2 bis 6, ferner umfassend:
Mittel zum Errechnen des Scores mittels eines von Folgendem:

$$\hat{\psi}_j = \frac{1}{N} \sum_{i=1}^{N} u_{i,j,r=1}$$

$$\hat{u}_{i,j} = \hat{\psi}_j + \Delta_i = \hat{\psi}_j + \frac{1}{M} \sum_{j=1}^{M} \left( u_{i,j,r=1} - \hat{\psi}_j \right)$$

$$\widehat{u_{i,j}} = \frac{1}{R} \sum_{r=1}^{R} u_{i,j,r}$$

wobei

N die Anzahl von Personen ist,

M die Anzahl von Benutzern ist,

R die Anzahl von subjektiven Tests ist, die von einer Anzahl von Beobachtern durchgeführt werden,

$u_{i,j,r}$ ein Opinion-Score-Wert von einem Beobachter i ist,

j eine j-te verarbeitete Videosequenz ist und

r die r-te Wiederholung des Tests ist.

8. Gerät nach einem der Ansprüche 2 bis 7, ferner umfassend:
Mittel zum Trainieren des neuronalen Faltungsnetzwerks unter Verwendung eines Satzes von Quellen-Frames.

9. Gerät nach Anspruch 8, wobei die Mittel zum Trainieren dafür ausgelegt sind:

den Zielwert zu erhalten;

den Normierungs-Quantisierungs-Parameter für jeden Quellen-Frame zu erhalten;

ein neuronales Faltungsnetzwerk für jeden Normierungs-Quantisierungs-Parameter zu trainieren.

10. Gerät nach einem der Ansprüche 2 bis 9, wobei das Gerät eines der folgenden ist:

ein Fahrzeug, das Mittel zum ferngesteuerten Fahren umfasst;

ein Internet-der-Dinge-Gerät.

11. Gerät nach Anspruch 2, umfassend mindestens einen Prozessor und mindestens einen Speicher, wobei die Mittel jeweils als ein Computercode implementiert sind, der in dem mindestens einen Speicher gespeichert ist und der beim Ausführen von dem mindestens einen Prozessor den mindestens einen Prozessor veranlasst, die jeweiligen Schritte des Verfahrens nach Anspruch 1 auszuführen.

12. Gerät nach Anspruch 11, wobei die Videodaten mehrere Frames umfassen, wobei der mindestens eine Speicher einen Computerprogrammcode umfasst, der dafür ausgelegt ist, mit dem mindestens einen Prozessor ferner das Gerät zu veranlassen, den Wert des Zielquantisierungsparameters einmal für alle N Frames der mehreren Frames zu bestimmen, wobei N größer ist als 1.

13. Gerät nach Anspruch 11 oder 12, wobei die Videodaten zwei oder mehr temporale Teilschichten auf verschiedenen Ebenen umfassen, wobei der mindestens eine Speicher einen Computerprogrammcode umfasst, der dafür ausgelegt ist, mit dem mindestens einen Prozessor ferner das Gerät zu veranlassen, den Wert für den Zielquantisierungsparameter nur für Frames auf einer untersten temporalen Teilschicht von den zwei oder mehr temporalen Teilschichten zu bestimmen.

14. Gerät nach Anspruch 11, 12 oder 13, wobei der mindestens eine Speicher einen Computerprogrammcode umfasst, der dafür ausgelegt ist, mit dem mindestens einen Prozessor ferner das Gerät zu Folgendem zu veranlassen:

Erhalten eines Zielquantisierungsparameters, der sich auf einen Ziel-Opinion-Score bezieht, auf der Grundlage des bestimmten Frames, der mit einem von verschiedenen Werten des Quantisierungsparameters codiert wurde; und

Auswerten des Opinion-Scores basierend auf dem Ziel-Opinion-Score.

15. Gerät nach einem der Ansprüche 11 bis 14, wobei der mindestens eine Speicher einen Computerprogrammcode umfasst, der dafür ausgelegt ist, mit dem mindestens einen Prozessor ferner das Gerät zu Folgendem zu veranlassen:
Empfangen des Normierungs-Quantisierungs-Parameters von einem Cloud-Service eines Kommunikationsnetzwerkes.

**Revendications**

1. Méthode comprenant

l'obtention, dans un codeur, de trames de données vidéo pour la transmission ;

la fourniture des trames des données vidéo pour la commande de débit, dans laquelle la commande de débit comprend :

**l'obtention** d'une valeur cible pour au moins un parmi un score d'opinion et un score d'opinion par utilisateur ;
**l'obtention** d'un paramètre de quantification de normalisation ;
l'utilisation du paramètre de quantification de normalisation pour coder et décoder une trame particulière des données vidéo,
le calcul d'une métrique de distorsion objective associée au paramètre de quantification de normalisation pour la trame particulière ;
**l'exécution** d'un réseau neuronal convolutif pour extraire au moins une caractéristique indiquant au moins une parmi la qualité perceptuelle et la complexité de la trame particulière en vue d'une efficacité de compression ;
l'utilisation d'un réseau neuronal dense et d'une variable indépendante pour déterminer une valeur pour un paramètre de quantification cible afin d'atteindre la valeur cible lors de la compression de la trame particulière en utilisant le paramètre de quantification cible, dans laquelle le réseau neuronal dense a été préalablement entraîné en utilisant comme entrées (i) des caractéristiques extraites de trames de données vidéo d'entraînement, (ii) des paramètres de quantification de normalisation ayant été utilisés pour encoder lesdites trames d'entraînement avec leurs métriques de distorsion objectives associées, et (iii) des paramètres de quantification cibles qui concernent des scores d'opinion cibles attendus après le codage desdites trames d'entraînement ;
dans laquelle le réseau neuronal dense utilise les caractéristiques extraites, le paramètre de quantification de normalisation et la métrique de distorsion objective associée à la trame particulière comme entrées pour déterminer le paramètre de quantification cible ; et
dans laquelle la méthode comprend en outre le codage de la trame particulière avec le paramètre de quantification cible pour générer une trame codée.

2. Appareil comprenant

des moyens pour obtenir des trames de données vidéo pour la transmission ;
des moyens pour fournir des trames des données vidéo pour la commande de débit, dans lequel la commande de débit comprend :

des moyens pour obtenir une valeur cible pour au moins un parmi un score d'opinion et un score d'opinion par utilisateur ;
des moyens pour obtenir un paramètre de quantification de normalisation ;
des moyens pour utiliser le paramètre de quantification de normalisation pour coder et décoder une trame particulière des données vidéo, et pour calculer une métrique de distorsion objective associée au paramètre de quantification de normalisation pour la trame particulière ;
des moyens pour exécuter un réseau neuronal convolutif pour extraire au moins une caractéristique indiquant au moins une parmi la qualité perceptuelle et la complexité de la trame particulière en vue d'une efficacité de compression ;
des moyens pour utiliser un réseau neuronal dense et une variable indépendante pour déterminer une valeur pour un paramètre de quantification cible afin d'atteindre la valeur cible lors de la compression de la trame en utilisant le paramètre de quantification cible, dans lequel le réseau neuronal dense a été préalablement entraîné en utilisant comme entrées (i) des caractéristiques extraites de trames de données vidéo d'entraînement, (ii) des paramètres de quantification de normalisation ayant été utilisés pour encoder lesdites trames d'entraînement avec leurs métriques de distorsion objectives associées, et (iii) des paramètres de quantification cibles qui concernent des scores d'opinion cibles attendus après le codage desdites trames d'entraînement ;
dans lequel le réseau neuronal dense utilise les caractéristiques extraites, le paramètre de quantification de normalisation et la métrique de distorsion objective associée à la trame particulière comme entrées pour déterminer le paramètre de quantification cible ; et
des moyens pour coder la trame particulière avec le paramètre de quantification cible pour générer une trame codée.

3. Appareil selon la revendication 2, dans lequel les données vidéo comprennent une pluralité de trames, dans lequel lesdits moyens pour utiliser un réseau neuronal dense sont configurés pour déterminer la valeur du paramètre de quantification cible une fois pour chaque N trames de la pluralité de trames, où N est supérieur à 1.

**4.** Appareil selon la revendication 2 ou 3, dans lequel les données vidéo comprennent deux sous-couches temporelles ou plus à différents niveaux, dans lequel lesdits moyens pour utiliser un réseau neuronal dense sont configurés pour déterminer la valeur du paramètre de quantification cible uniquement pour les trames d'une sous-couche temporelle qui est la sous-couche temporelle la plus basse des deux sous-couches temporelles ou plus.

**5.** Appareil selon la revendication 2, 3 ou 4 comprenant en outre :

des moyens pour obtenir un paramètre de quantification cible concernant un score d'opinion cible sur la base de la trame particulière codée avec l'une des différentes valeurs du paramètre de quantification ;
dans lequel l'appareil est configuré pour évaluer le score d'opinion sur la base du score d'opinion cible.

**6.** Appareil selon l'une des revendications 2 à 5, dans lequel les moyens pour obtenir un paramètre de quantification de normalisation sont configurés pour recevoir le paramètre de quantification de normalisation d'un service en nuage d'un réseau de communication.

**7.** Appareil selon l'une des revendications 2 à 6 comprenant en outre :
des moyens pour calculer le score par l'une des formules suivantes :

$$\widehat{\psi}_j = \frac{1}{N} \sum_{i=1}^{N} u_{i,j,r} = 1$$

$$\widehat{u}_{i,j} = \widehat{\psi}_j + \Delta_i = \widehat{\psi}_j + \frac{1}{M} \sum_{j=1}^{M} (u_{i,j,r} = 1 - \widehat{\psi}_j)$$

$$\widehat{u_{i,j}} + \frac{1}{R} \sum_{r=1}^{R} u_{i,j,r}$$

où N est le nombre de sujets,
M est le nombre d'utilisateurs,
R est un nombre de tests subjectifs effectués par un certain nombre d'observateurs,
$u_{i,j,r}$ est une valeur de score d'opinion par un observateur i,
j est une j$^{ième}$ séquence vidéo traitée, et
r est la r$^{ième}$ répétition du test.

**8.** Appareil selon l'une des revendications 2 à 7 comprenant en outre :
des moyens pour entraîner le réseau neuronal convolutif en utilisant un ensemble de trames sources.

**9.** Appareil selon la revendication 8, dans lequel les moyens d'entraînement sont configurés pour :

obtenir la valeur cible ;
obtenir le paramètre de quantification de normalisation pour chaque trame source ;
entraîner un réseau neuronal convolutif pour chaque paramètre de quantification de normalisation.

**10.** Appareil selon l'une des revendications 2 à 9, dans lequel l'appareil est l'un des suivants :

un véhicule comprenant des moyens de conduite téléopérée ;
un appareil de l'internet des objets.

**11.** Appareil selon la revendication 2, comprenant au moins un processeur et au moins une mémoire, dans lequel les moyens sont chacun mis en œuvre sous la forme d'un code informatique stocké dans ladite au moins une mémoire et qui, lorsqu'ils sont exécutés par ledit au moins un processeur, amènent ledit au moins un processeur à effectuer les étapes respectives de la méthode de la revendication 1.

**12.** Appareil selon la revendication 11, dans lequel les données vidéo comprennent une pluralité de trames, dans lequel ladite au moins une mémoire comprend un code de programme informatique configuré pour, avec l'au moins un processeur, amener en outre l'appareil à déterminer la valeur du paramètre de quantification cible une fois pour chaque N trames de la pluralité de trames, où N est supérieur à 1.

**13.** Appareil selon la revendication 11 ou 12, dans lequel les données vidéo comprennent deux sous-couches temporelles ou plus à différents niveaux, dans lequel ladite au moins une mémoire comporte un code de programme informatique configuré pour, avec l'au moins un processeur, amener en outre l'appareil à déterminer la valeur du paramètre de quantification cible uniquement pour les trames d'une sous-couche temporelle qui est la sous-couche temporelle la plus basse des deux sous-couches temporelles ou plus.

**14.** Appareil selon la revendication 11, 12 ou 13 ladite au moins une mémoire comprend un code de programme informatique configuré pour, avec l'au moins un processeur, amener en outre l'appareil à :

obtenir un paramètre de quantification cible concernant un score d'opinion cible sur la base de la trame codée avec l'une de différentes valeurs du paramètre de quantification ; et
évaluer le score d'opinion sur la base du score d'opinion cible.

**15.** Appareil selon l'une des revendications 11 à 14, ladite au moins une mémoire comporte un code de programme informatique configuré pour, avec l'au moins un processeur, amener en outre l'appareil à :
recevoir le paramètre de quantification de normalisation d'un service en nuage d'un réseau de communication.

Fig. 1

204

Raw video

202

Compression

210

Compressed
video

Fig. 2

Rate Control

206

Per-user
MOS
models

208

Constant Bitrate

Constant QP

Constant MOS

Constant UOS

Bitrate

Time

Fig. 3

Fig. 4

Fig. 5

For Every Video Sequence SRC

For Every Processed Sequence PVS(SRC, QP)

For Every Frame in Sequence (F)

SRC(F)   PSNR(SRC, PVS, F)   QP

CNN

features   PSNR   QP

Dense Layers

Regressor

QPtarget

Fig. 6

Fig. 7

Fig. 8

Fig. 9

Fig. 10

**EP 4 145 394 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017155786 A

**Non-patent literature cited in the description**

- Perceptual Adaptive Quantization Parameter Selection using Deep Convolutional Features for HEVC Encoder. IEE ACESS. IEE, 24 February 2022, vol. 8